# EUROPÄISCHE PATENTSCHRIFT

(11) **EP 2 724 405 B1**
(45) Veröffentlichungstag und Bekanntmachung des Hinweises auf die Patenterteilung: **13.05.2015**
(21) Anmeldenummer: 12724999.3
(22) Anmeldetag: 30.05.2012
(51) Int. Cl.: H01M 4/66, H01M 2/00, C23C 22/78, C23G 1/00, C23G 3/02, H01M 10/0525

(54) **CHEMISCH BEHANDELTE STROMABLEITERFOLIE AUS ALUMINIUM ODER EINER ALUMINIUMLEGIERUNG**
CHEMICALLY TREATED CURRENT COLLECTOR FOIL PRODUCED OF ALUMINUM OR AN ALUMINUM ALLOY
FILM COLLECTEUR DE COURANT TRAITÉ CHIMIQUEMENT, EN ALUMINIUM OU EN ALLIAGE D'ALUMINIUM

(30) Priorität: 21.06.2011 EP 11170833
(43) Veröffentlichungstag der Anmeldung: 30.04.2014
(73) Patentinhaber: Hydro Aluminium Rolled Products GmbH, 41515 Grevenbroich (DE)
(72) Erfinder: HAMPEL, Ulrich, 41516 Grevenbroich (DE); DENKMANN, Volker, 47906 Kempen (DE); SIEMEN, Andreas, 41363 Jüchen (DE); ECKHARD, Kathrin, 53123 Bonn (DE); SCHENKEL, Wilhelm, 41515 Grevenbroich (DE); EBERHARD, Sandra, 41363 Jüchen (DE); BÖGERSHAUSEN, Dieter, 41515 Grevenbroich (DE)
(74) Vertreter: Cohausz & Florack
(86) Internationale Anmeldenummer: PCT/EP2012/060186
(87) Internationale Veröffentlichungsnummer: WO 2012/175301

(56) Entgegenhaltungen:
- EP-A1- 2 202 823
- WO-A1-2007/045676
- DE-A1- 3 519 090
- JP-A- 2005 002 371
- JP-A- 2007 250 376
- JP-A- 2008 060 125
- JP-A- 2008 258 010
- JP-A- 2009 009 778
- JP-A- 2009 024 262
- US-A1- 2005 118 440

## Beschreibung

Die Erfindung betrifft eine Stromableiterfolie aus Aluminium oder einer Aluminiumlegierung, die Verwendung der Stromableiterfolie für Batterien oder Akkumulatoren, insbesondere Lithium-Ionen-Akkumulatoren genannt, sowie ein Verfahren zur Herstellung der Stromableiterfolie.

Stromableiterfolien bestehen häufig aus einer Aluminiumfolie und weisen zusätzlich eine Beschichtung auf, welche in Regel aus einem Metalloxid bestehen, beispielsweise einem Lithium-Cobalt(III)-Oxid. Unter einer Aluminiumfolie wird im Weiteren eine Folie bestehend aus Aluminium oder einer Aluminiumlegierung verstanden. Aluminiumfolien werden bei ihrer Herstellung in der Regel während des Walzvorgangs mit einem Walzöl benetzt, um beispielsweise Reibungseffekte, den Walzverschleiß oder ein Festkleben des Walzprodukts während des Walzens zu minimieren. Das Walzöl muss jedoch vor der weiteren Verwendung der Aluminiumfolie in der Regel wieder entfernt werden. Insbesondere bei der Verwendung von Aluminiumfolien für Lithium-Ionen-Akkumulatoren, beispielsweise als Stromableiterfolie, beeinflusst die Qualität der Aluminiumfolie die Qualität der hergestellten Lithium-Ionen-Akkumulatoren. Aus dem Stand der Technik ist es bekannt, mit Walzöl beschichtete Aluminiumfolie zu reinigen, insbesondere zu entfetten, indem die Aluminiumfolie in Form von Folienwickeln, sogenannten Coils, einer thermischen Behandlung unterzogen werden. Dabei entfestigt bzw. rekristallisiert die walzharte Folie jedoch in Abhängigkeit von Temperatur und Behandlungszeit. Die Aluminiumfolie verliert deutlich an Festigkeit und ist schwieriger zu verarbeiten. Außerdem verdickt sich aufgrund der Wärmebehandlung die Oxidschicht durch den Temperatur- und Sauerstoffeinfluss, was zu einem erhöhten elektrischen Widerstand der Stromableiterfolie führt. Wird das Walzöl nicht vollständig entfernt, kann es zudem noch zu Haftungsproblemen der Metalloxidschicht kommen.

Um das Problem der Entfestigung zu lösen wird in der veröffentlichten US-Patentanmeldung US 2009/0269609 vorgeschlagen eine thermische bei Temperaturen zwischen 80 °C und 160 °C durchzuführen. Allerdings wurde festgestellt, dass durch eine thermische Behandlung das Walzöl aus einem Folienwickel in Abhängigkeit von Temperatur, Zeit, Wicklungsaufbau des Coils und der Oberflächenrauheit der Aluminiumfolie nicht vollständig und gleichmäßig entfernt werden kann. Vor allem bei den niedrigen Temperaturen von 80 °C bis 160 °C besteht die Gefahr, dass Walzölrückstände auf der Aluminiumfolie verbleiben und so eine Weiterverarbeitung, beispielsweise ein Beschichten mit Metalloxid, problematisch ist.

Daneben ist eine saure oder alkalische Reinigung von Aluminiumbändern, beispielsweise in einem Coil-to-Coil-Verfahren bekannt. Die Banddicken der Aluminiumbänder liegen aber in der Regel bei mehr als 100 µm, zumeist mehr als 200 µm. Stromableiterfolien sind jedoch um mehr als den Faktor 2 bis 8 dünner als die bisher nasschemisch gereinigten Aluminiumbänder.

Aus der JP 2008 258010 A ist beispielsweise eine Aluminium-Stromableiterfolie bekannt, welche beispielsweise in wieder aufladbaren Batterien zum Einsatz kommt. Zur Reinigung der Aluminiumfolie nach dem Walzen von Öl wird eine Entfettungsbehandlung durchgeführt, wobei Säuren und Basen verwendet werden können. Diese werden zum Auflösen des Öls verwendet, ohne das Material anzugreifen.

Hiervon ausgehend liegt der Erfindung die Aufgabe zugrunde, eine Stromableiterfolie bereitzustellen, welche in Bezug auf die Leitfähigkeit und Zugfestigkeit sehr gute Eigenschaften aufweist und gleichzeitig kostengünstig herstellbar ist. Daneben liegt der Erfindung die Aufgabe zu Grunde, ein Verfahren zur Herstellung der Stromableiterfolie sowie vorteilhafte Verwendungen der Stromableiterfolie vorzuschlagen.

Die Aufgabe wird gemäß einer ersten Lehre durch eine Stromableiterfolie nach Anspruch 1 gelöst.

Es hat sich gezeigt, dass eine Stromableiterfolie, welche eine sauer oder alkalisch gebeizte Oberfläche aufweist, geringere elektrische Widerstände und zudem verbesserte Haftungseigenschaften bezüglich der Beschichtung mit Metalloxid besitzt. Insbesondere findet kein Entfestigungsvorgang statt, da die Wärmebehandlung entfällt. Das bedeutet, dass Folien mit höheren mechanischen Zugfestigkeiten als Stromableiterfolie genutzt werden kann. Es besteht die Möglichkeit, die Stromableiterfolien noch dünner zu gestalten. Beim Beizen der Stromableiterfolie kann also eine Säure, beispielsweise Schwefelsäure, oder auch eine Base, beispielsweise Natronlauge zum Beizen eingesetzt werden. Beide Beizmittel können einen ausreichenden Beizabtrag bewirken.

Vorzugsweise wird der Beizabtrag so eingestellt, dass die abgetragene Dicke weniger als 1 µm, insbesondere weniger als 0,5 µm bzw. bevorzugt 0,01 - 0,1 µm beträgt. Die nach dem Walzen vorhandene Oxidschicht der Folie wird durch den Beizangriff damit im Wesentlichen abgetragen, so dass sich durch den Luftsauerstoff eine neue Aluminiumoxidschicht bildet. Durch diesen Oberflächenabtrag können die Walzölrückstände sicher entfernt werden, so dass auf die Entfettung durch eine Glühung verzichtet werden kann. Wie bereits zuvor ausgeführt, bleibt die mechanische Festigkeit der Stromableiterfolie damit unverändert. Die sich nach dem Oberflächenabtrag bildende Aluminiumoxidschicht ist zudem deutlich dünner als die aufgrund des Warmwalzens und der weiteren Walzprozesse gebildete Oxidschicht. Der elektrische Widerstand der erfindungsgemäßen Stromableiterfolie ist damit geringer als der konventioneller Stromableiterfolien.

Gemäß einer bevorzugten Ausführungsform der erfindungsgemäßen Stromableiterfolie ist die Oberfläche in einem Coil-to-Coil-Verfahren sauer oder alkalisch gebeizt. Dies hat den Vorteil, dass die Stromableiterfolie besonders günstig herstellbar ist und zusätzlich eine besonders gleichmäßige Oberflächeneigenschaften aufweist, so dass eine gleichbleibende Qualität der Stromableiterfolie bereitgestellt werden kann. Überraschenderweise zeigte sich zusätzlich, dass die für Aluminiumbänder verwendeten Vorrichtungen zum Entfetten durch eine saure oder alkalische Beize auch für die Verwendung sehr dünner Stromableiterfolien geeignet sind.

Gemäß einer weiteren Ausführungsform der Stromableiterfolie weist diese eine Dicke von 5 µm - 50 µm, vorzugsweise 10 µm - 30 µm, besonders bevorzugt 15 - 25 µm auf. Die geringen Dicken der Stromableiterfolie ermöglichen es, besonders kompakte Batterien oder Akkumulatoren, beispielsweise Lithium-Ionen-Akkumulatoren herzustellen. Extrem dünne Stromableiterfolien mit einer Dicke von 5 µm sind schwieriger zu verarbeiten, verbrauchen aber am wenigsten Material. Wohingegen die Verwendung von Stromableiterfolien mit einer Dicke von mehr als 50 µm eventuell zu Einschränkung in Bezug auf die Anzahl der Schichten bei vorgegebener Größe des Akkumulators oder der Batterie führen.

Gemäß einer weiteren Ausgestaltung der Stromableiterfolien weist diese im walzharten Zustand H18 eine Zugfestigkeit von mehr als 135 MPa auf, so dass die Stromableiterfolie auch auf einfache Weise weiteren Arbeitsschritten, beispielsweise einer Beschichtung und der Weiterverarbeitung zu einer Batterie oder einem Akkumulator trotz ihrer geringen Dicke verwendet werden kann.

Im Gegensatz zu Aluminiumfolien, welche für Elektrolytkondensatoren verwendet werden, beträgt die Rautiefe der Oberfläche der erfindungsgemäßen Stromableiterfolie R_{A} 0,01 µm - 1 µm, vorzugsweise 0,2 µm - 0,3 µm. Die Stromableiterfolie weist daher bevorzugt eine glänzende bzw. hochglänzende Oberfläche auf. Es hat sich gezeigt, dass diese Oberflächeneigenschaften für die Verwendung als Stromableiterfolie zu besseren Ergebnissen im Hinblick auf den elektrischen Widerstand bzw. die Beschichtungseigenschaften hat.

Um die Wirtschaftlichkeit der Stromableiterfolie zu verbessern besitzt diese eine Breite von 400 mm bis 1450 mm, bevorzugt 450 mm bis 1200 mm. Mit dieser sehr breiten Stromableiterfolie lassen sich auch Batterien oder Akkumulatoren mit hoher Kapazität, beispielsweise für Elektrofahrzeuge herstellen, die entsprechende Breiten aufweisen. Die genannten Breiten der Stromableiterfolie lassen sich ohne Weiteres durch die gewalzte Aluminiumfolie bereitstellen.

Als Werkstoff für die Stromableiterfolien haben sich die Aluminiumlegierungen vom Typ EN AW 1050, EN AW 1200 oder EN AW 1085 bewährt. Diese weisen gegenüber Reinaluminium verbesserte mechanische Kennwerte auf und garantieren aufgrund der geringen Anteile an Legierungszusätzen einen sehr geringen Einfluss auf etwaige unerwünschte chemische Prozesse zwischen der Metalloxidbeschichtung und der Stromableiterfolie, wie beispielsweise Korrosion.

Gemäß einer weiteren Ausgestaltung der erfindungsgemäßen Stromableiterfolie weist diese ein- oder beidseitig eine Oberflächenpassivierung auf. Die Oberflächenpassivierung kann beispielsweise durch eine Chromatierung oder durch Beschichten mit einer chromfreien Passivierungsschicht erreicht werden. Eine chromfreie Passivierungsvariante kann beispielsweise auf Basis von Silanen, Titan oder Zirkon oder anderen Elementen bzw. Kombinationen hiervon bereitgestellt werden. Die Passivierung dient insbesondere dazu, den Oberflächenzustand, vor allem die Bildung von Aluminiumoxiden, zu unterdrücken, so dass die elektrischen Eigenschaften der Stromableiterfolie nach der Passivierung konstant bleiben. Gleichzeitig verbessert die Passivierung auch die Haftung der Metalloxidbeschichtung.

Gemäß einer zweiten Lehre der vorliegenden Erfindung wird die oben aufgezeigte Aufgabe durch ein Verfahren zur Herstellung einer Stromableiterfolie für eine Batterie, einen Akkumulator oder einen Lithium-Ionen-Akkumulator gelöst, bei welchem zunächst eine Folie bestehend aus einer Aluminiumlegierung durch Warm- und/oder Kalzwalzen auf eine Enddicke von 5 µm - 50 µm hergestellt wird und die Folie nach dem Walzen einer nasschemischen sauren oder nasschemisch alkalischen Oberflächenbeize unterzogen wird. Wie bereits zuvor ausgeführt, weist die so hergestellte Stromableiterfolie deutlich bessere elektrische Eigenschaften aber auch mechanische Eigenschaften auf, so dass diese leichter zu einer Batterie bzw. einem Akkumulator weiterverarbeitet werden kann.

Wird die nasschemische saure oder nasschemische alkalische Oberflächenbeize in einem Coil-to-Coil-Verfahren durchgeführt, können die Produktionskosten für die Herstellung einer entsprechenden Stromableiterfolie noch weiter gesenkt werden.

Wie bereits zuvor ausgeführt wird die Stromableiterfolie vorzugsweise aus einer Aluminiumlegierung vom Typ EN AW 1050, EN AW 1200 oder EN AW 1085 hergestellt. Im Hinblick auf die Vorteile dieser Aluminiumlegierungen wird auf die obigen Ausführungen verwiesen.

Wird die Stromableiterfolie an Enddicke, glanz- oder hochglanzgewalzt, kann eine für die Verwendung als Stromableiterfolie vorteilhafte Oberfläche in Verbindung mit der Oberflächenbeize bereitgestellt werden. Die Rautiefe R_{A} beträgt dann vorzugsweise 0,01 µm - 1 µm bzw. besonders bevorzugt 0,2 - 0,3 µm.

Wird gemäß einer weiteren Ausgestaltung die gebeizte Oberfläche der Stromableiterfolie passiviert, kann der Oberflächenzustand für die nächsten Verarbeitungsschritte konserviert und damit deren elektrische Eigenschaften optimiert werden. Vorzugsweise erfolgt die Passivierung der Oberfläche der Folie durch eine Chromatierung oder eine chromfreie Passivierung, bevorzugt in einem Tauchverfahren, alternativ in einem No-Rinse-Verfahren. Diese Verfahren können auf einfache Weise inline, d.h. unmittelbar nach der nasschemischen Beize durchgeführt werden.

Bevorzugt beträgt die Breite der Folie 400 mm - 1450 mm, so dass Stromableiterfolien mit sehr großen Breiten bereitgestellt werden können. Diese sehr breiten Stromableiterfolien, beispielsweise mit einer Breite von mehr als 700 mm, werden bei der Herstellung von Lithium-Ionen-Akkumulatoren für die Elektroantriebe von Kraftfahrzeugen verwendet.

Gemäß einer dritten Lehre der vorliegenden Erfindung wird die oben aufgezeigte Aufgabe schließlich durch die Verwendung einer erfindungsgemäßen Stromableiterfolie für die Herstellung von Batterien, Akkumulatoren, Lithium-Ionen-Akkumulatoren oder Lithium-Ionen-Batterien verwendet. Wie bereits zuvor ausgeführt, führt die Verwendung der erfindungsgemäßen Stromableiterfolie zu einem deutlichen Kostenvorteil gegenüber der Verwendung herkömmlicher Stromableiterfolien. Darüber hinaus sind die Verarbeitungseigenschaften in Bezug auf die mechanische Festigkeit und die Beschichtungseigenschaften der erfindungsgemäßen Stromableiterfolie verbessert.

Im Weiteren soll die Erfindung anhand von Ausführungsbeispielen in Verbindung mit der Zeichnung näher erläutert werden. Die Zeichnung zeigt in
- Fig. 1: eine schematische Schnittansicht eines Lithium-Ionen-Akkumulators und
- Fig. 2: eine schematische Schnittansicht einer Vorrichtung zur Durchführung eines Ausführungsbeispiels eines erfindungsgemäßen Verfahrens.

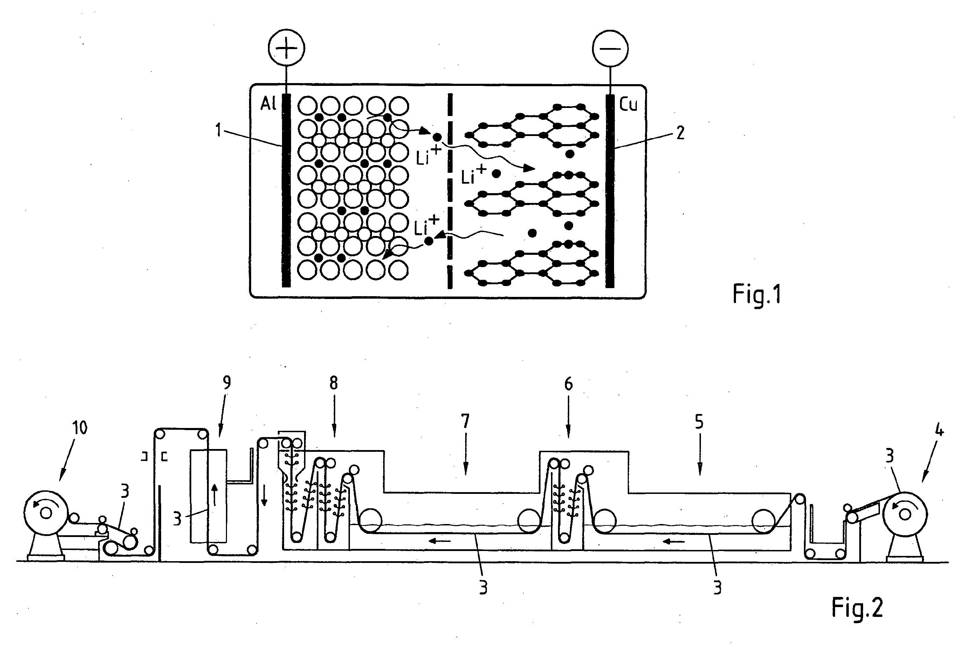

In einer Batterie, beispielsweise in einer Lithium-Ionen-Batterie oder einem Lithium-Ionen-Akkumulator wird die elektrische Energie in Lithium-Atomen und ÜbergangsmetallIonen in einem chemischen Prozess durch eine Stoffänderung gespeichert. Im Lithium-Ionen-Akkumulator kann Lithium in ionisierter Form durch den Elektrolyten zwischen den beiden Elektroden 1 und 2 hin und her wandern, so dass Entladeprozesse aber auch Ladevorgänge durchgeführt werden können. Wie in Fig. 1 zu erkennen ist, wird an der positiven Seite häufig eine Aluminiumelektrode verwendet, auf welcher ein Lithium-Metalloxid, beispielsweise Lithium-Kobalt-Dioxid abgeschieden ist. Die Stromableiterfolie, welche als positive Elektrode 1 verwendet werden, weisen eine Dicke von bevorzugt 15 - 25 µm auf und werden aus den Aluminiumlegierungen vom Typ EN AW 1050, EN AW 1200 oder EN AW 1085 hergestellt. Im Gegensatz zu Lithium-Ionen-Akkumulatoren, welche in kleineren Elektrogeräten eingesetzt werden, beispielsweise Handys, weisen Lithium-Ionen-Akkumulatoren für die Stromversorgung beispielsweise von Elektrofahrzeugen relativ große Breiten auf, um die notwendige Kapazität bereitzustellen. Beispielsweise sind Breiten von 400 mm bis 1450 mm, bevorzugt 450 mm bis zu 1200 mm denkbar.

Um die Eigenschaften der Stromableiterfolien weiter zu verbessern, wird diese erfindungsgemäß nach dem Walzen auf Enddicke einer sauren oder alkalischen Beize unterzogen, so dass die Oberfläche alkalisch oder sauer gebeizt ist. Hierdurch wird bei einem Beizangriff von 0,01 µm bis 0,1 µm die natürliche Oxidschicht, welche sich im Herstellprozess beim Warm- oder Kaltwalzen bildet, entfernt. Die sich darauf hin neu bildende Aluminiumoxidschicht ist dann wesentlich dünner und führt unmittelbar zu einer Verringerung des elektrischen Widerstandes beim Stromfluss von der Beschichtung der Stromableiterfolie in die Aluminiumfolie hinein.

In Fig. 2 ist nun ein Ausführungsbeispiel zur Durchführung des erfindungsgemäßen Verfahrens dargestellt, bei welchem in einem Coil-to-Coil-Verfahren eine Aluminiumfolie gebeizt, oberflächenpassiviert und anschließend wieder aufgewickelt wird. Zunächst wird ein Coil 3 auf einer Abwickelhaspel 4 einem Entfettungstauchbad 5 zugeführt, in welchem die Aluminiumfolie oberflächengebeizt wird. Als Beizmedium kann beispielsweise Schwefelsäure aber auch Natronlauge dienen. Bei Verwendung einer alkalischen Beize wie beispielsweise Natronlauge wird bevorzugt nach dem Tauchbad 5 sauer gespült und eine Dekapierung vorgenommen. Damit können insbesondere Beizreste, welche an der Aluminiumfolie anhaften besser entfernt werden. Bei einer sauren Beize reicht eine Spülung und damit eine Entfernung des Beizmediums beispielsweise durch Wasser aus. Die Spülung 6 findet bevorzugt unmittelbar nach dem Tauchbad statt. In dem dargestellten Ausführungsbeispiel wird die Aluminiumfolie 3 unmittelbar nach dem Spülen 6 einer Oberflächenpassivierung, beispielsweise einer Chromatierung zugeführt, so dass der Oberflächenzustand der Aluminiumfolie nach dem Beizschritt konserviert wird. Die Chromatierung 7 findet ebenfalls in einem Tauchvorgang statt. Anschließend kann die Folie 3 einem weiteren Spülvorgang 8 unterzogen werden, bei welchem überflüssige Bestandteile der Oberflächenpassivierung entfernt werden. Danach durchläuft die oberflächenpassivierte Aluminiumfolie einen Trocknungsvorgang, um die Oberflächenpassivierungsschicht zu trocknen. Schließlich wird die Aluminiumfolie 3 auf einer Aufwickelhaspel 10 aufgewickelt. Wie in dem Ausführungsbeispiel aus Fig. 2 ersichtlich wird die Oberflächenpassivierung inline mit der Oberflächenbeize der Aluminiumfolie durchgeführt. Die Breite der Aluminiumfolie kann bei dem dargestellten Ausführungsbeispiel zwischen 400 mm - 1450 mm liegen. Durch die Coil-to-Coil-Verarbeitung kann neben einer hohen Fertigungsgeschwindigkeit auch gleichzeitig eine besonders gleichbleibende Qualität der Stromableiterfolie gewährleistet werden und zudem sehr breite Stromableiterfolien zur Verfügung gestellt werden.

## Patentansprüche

1. Stromableiterfolie (1) einer Batterie, eines Akkumulators oder eines Lithium-Ionen-Akkumulators aus Aluminium oder einer Aluminiumlegierung,
**dadurch gekennzeichnet, dass** die Stromableiterfolie (1) eine sauer oder alkalisch gebeizte Oberfläche aufweist,
die Rautiefe der Oberfläche der Stromableiterfolie (1) R_{A} 0,01 µm bis 1 µm beträgt und die Stromableiterfolie (1) gleichmäßige Oberflächeneigenschaften aufweist.

2. Stromableiterfolie nach Anspruch 1,
**dadurch gekennzeichnet, das**s die Oberfläche der Stromableiterfolie (1) in einem Coil-to-Coil-Verfahren sauer oder alkalisch gebeizt ist.

3. Stromableiterfolie nach Anspruch 1 oder 2,
**dadurch gekennzeichnet, dass** die Stromableiterfolie (1) eine Dicke von 5 µm bis 50 µm aufweist.

4. Stromableiterfolie nach einem der Ansprüche 1 bis 3,
**dadurch gekennzeichnet, dass** die Stromableiterfolie im walzharten Zustand H18 eine Zugfestigkeit von mehr als 135 MPa aufweist.

5. Stromableiterfolie nach einem der Ansprüche 1 bis 4,
**dadurch gekennzeichnet, dass** die Stromableiterfolie eine Breite von 400 mm bis 1450 mm aufweist.

6. Stromableiterfolie nach einem der Ansprüche 1 bis 5,
**dadurch gekennzeichnet, dass** die Stromableiterfolie aus einer Aluminiumlegierung vom Typ EN AW 1050, EN AW 1200 oder EN AW 1085 besteht.

7. Stromableiterfolie nach einem der Ansprüche 1 bis 6,
**dadurch gekennzeichnet, dass** die Stromableiterfolie ein- oder beidseitig eine Oberflächenpassivierung aufweist.

8. Stromableiterfolie nach Anspruch 7,
**dadurch gekennzeichnet, dass** die Oberflächenpassivierung eine Chromatierung oder eine chromfreie Passivierungsschicht aufweist.

9. Stromableiterfolie nach einem der Ansprüche 1 bis 8,
**dadurch gekennzeichnet, dass** die Rautiefe der Oberfläche der Stromableiterfolie (1) R_{A} 0,2 µm bis 0,3 µm beträgt.

10. Verfahren zur Herstellung einer Stromableiterfolie für eine Batterie, einen Akkumulator oder einen Lithium-Ionen-Akkumulator nach einem der Ansprüche 1 bis 9, wobei zunächst eine Folie (3) bestehend aus einer Aluminiumlegierung durch Warm- und/oder Kaltwalzen auf eine Enddicke 5 µm bis 50 µm hergestellt wird und die Folie nach dem Walzen einer nasschemischen sauren oder nasschemischen alkalischen Oberflächenbeize in einem Coil-to-Coil-Verfahren unterzogen wird, wobei der Beizabtrag so eingestellt wird, dass die abgetragene Dicke weniger als 1 µm beträgt.

11. Verfahren nach Anspruch 10,
**dadurch gekennzeichnet, dass** die Folie aus einer Aluminiumlegierung vom Typ EN AW 1050, EN AW 1200 oder EN AW 1085 hergestellt wird.

12. Verfahren nach einem der Ansprüche 10 bis 11,
**dadurch gekennzeichnet, dass** der Beizabtrag so eingestellt wird, dass die abgetragene Dicke weniger als 0,5 µm beträgt.

13. Verfahren nach einem der Ansprüche 10 bis 12,
**dadurch gekennzeichnet, dass** die gebeizte Oberfläche der Folie passiviert wird.

14. Verfahren nach einem der Ansprüche 10 bis 13,
**dadurch gekennzeichnet, dass** die Breite der Folie 400 mm bis 1450 mm beträgt.

15. Verwendung einer Stromableiterfolie nach einem der Ansprüche 1 bis 9 für die Herstellung von Batterien, Akkumulatoren, Lithium-Ionen-Akumulatoren oder Lithium-Ionen-Batterien.

## Claims

1. A current collector foil (1) of a battery, of an accumulator, or of a lithium-ion accumulator, made of aluminium or an aluminium alloy,
**characterised in that**
the current collector foil (1) has an acid-pickled or alkali-pickled surface, the surface roughness of the current collector foil (1) R_{A} is 0.01 µm to 1 µm and the current collector foil (1) has uniform surface properties.

2. The current collector foil according to claim 1,
**characterised in that**
the surface of the current collector foil (1) is acid-pickled or alkali-pickled in a coil-to-coil method.

3. The current collector foil according to claim 1 or 2,
**characterised in that**
the current collector foil (1) has a thickness of 5 µm to 50 µm.

4. The current collector foil according to one of claims 1 to 3,
**characterised in that**
the current collector foil has a tensile strength in the hard-rolled state H18 of more than 135 MPa.

5. The current collector foil according to one of claims 1 to 4,
**characterised in that**
the current collector foil has a width of 400 mm to 1450 mm.

6. The current collector foil according to one of claims 1 to 5,
**characterised in that**
the current collector foil consists of an aluminium alloy of type EN AW 1050, EN AW 1200 or EN AW 1085.

7. The current collector foil according to one of claims 1 to 6,
**characterised in that**
the current collector foil has a surface passivation on one or both sides.

8. The current collector foil according to claim 7,
**characterised in that**
the surface passivation has a chromate coating or a chromium-free passivation layer.

9. The current collector foil according to one of claims 1 to 8,
**characterised in that**
the surface roughness of the current collector foil (1) R_{A} is 0.2 µm to 0.3 µm.

10. A method for producing a current collector foil for a battery, an accumulator, or a lithium-ion accumulator, according to one of claims 1 to 9, wherein at first a foil (3) consisting of an aluminium alloy is produced by hot-rolling and/or cold-rolling to an end thickness of 5 µm to 50 µm, and then, after the rolling operation, the foil is subjected to wet-chemical acid or wet-chemical alkali surface pickling in a coil-to-coil method, wherein the pickling rate is set in such a way that the removed thickness is less than 1 µm.

11. The method according to claim 10,
**characterised in that**
the foil is produced from an aluminium alloy of type EN AW 1050, EN AW 1200 or EN AW 1085.

12. The method according to one of claims 10 to 11,
**characterised in that**
the pickling rate is set in such a way that the removed thickness is less than 0.5 µm.

13. The method according to one of claims 10 to 12,
**characterised in that**
the pickled surface of the foil is passivated.

14. The method according to one of claims 10 to 13,
**characterised in that**
the width of the foil is 400 mm to 1450 mm.

15. Use of a current collector foil according to one of claims 1 to 9 for the production of batteries, accumulators, lithium-ion accumulators, or lithium-ion batteries.

## Revendications

1. Film collecteur de courant (1) d'une batterie, d'un accumulateur ou d'un accumulateur lithium-ion en aluminium ou un alliage d'aluminium,
**caractérisé en ce que**
le film collecteur de courant (1) présente une surface décapée par voie acide ou alcaline,
la rugosité de la surface du film collecteur de courant (1) R_{A} étant de 0,01 µm à 1 µm et le film collecteur de courant (1) présentant des propriétés de surface uniformes.

2. Film collecteur de courant selon la revendication 1,
**caractérisé en ce que**
la surface du film collecteur de courant (1) est décapée selon un procédé coil-to-coil par voie acide ou alcaline.

3. Film collecteur de courant selon la revendication 1 ou 2,
**caractérisé en ce que**
le film collecteur de courant (1) présente une épaisseur de 5 µm à 50 µm.

4. Film collecteur de courant selon l'une des revendications 1 à 3,
**caractérisé en ce que**
le film collecteur de courant présente, à l'état laminé dur H18, une résistance à la traction de plus de 135 MPa.

5. Film collecteur de courant selon l'une des revendications 1 à 4,
**caractérisé en ce que**
le film collecteur de courant présente une largeur de 400 mm à 1450 mm.

6. Film collecteur de courant selon l'une des revendications 1 à 5,
**caractérisé en ce que**
le film collecteur de courant se compose d'un alliage d'aluminium de type EN AW 1050, EN AW 1200 ou EN AW 1085.

7. Film collecteur de courant selon l'une des revendications 1 à 6,
**caractérisé en ce que**
le film collecteur de courant présente, d'un côté ou des deux côtés, une passivation de surface.

8. Film collecteur de courant selon la revendication 7,
**caractérisé en ce que**
la passivation de surface présente une chromatation ou une couche de passivation sans chrome.

9. Film collecteur de courant selon l'une des revendications 1 à 8,
**caractérisé en ce que**
la rugosité de la surface du film collecteur de courant (1) R_{A} est de 0,2 µm à 0,3 µm.

10. Procédé pour la fabrication d'un film collecteur de courant pour une batterie, un accumulateur ou un accumulateur lithium-ion selon l'une des revendications 1 à 9, dans lequel on fabrique tout d'abord un film (3) se composant d'un alliage d'aluminium grâce à un laminage à chaud et/ou à froid à une épaisseur finale de 5 µm à 50 µm et après le laminage, le film étant soumis à un décapage de surface chimique humide par voie acide ou chimique humide par voie alcaline dans un procédé coil-to-coil, l'enlèvement par décapage étant réglé de manière à ce que l'épaisseur enlevée soit de moins de 1 µm.

11. Procédé selon la revendication 10,
**caractérisé en ce que**
le film est fabriqué en un alliage d'aluminium de type EN AW 1050, EN AW 1200 ou EN AW 1085.

12. Procédé selon l'une des revendications 10 à 11,
**caractérisé en ce que**
l'enlèvement par décapage est réglé de manière à ce que l'épaisseur enlevée soit de moins de 0,5 µm.

13. Procédé selon l'une des revendications 10 à 12,
**caractérisé en ce**
**que** la surface décapée du film est passivée.

14. Procédé selon l'une des revendications 10 à 13,
**caractérisé en ce que**
la largeur du film est de 400 mm à 1450 mm.

15. Utilisation d'un film collecteur de courant selon l'une des revendications 1 à 9 pour la fabrication de batteries, d'accumulateurs, d'accumulateurs lithium-ion ou de batteries lithium-ion.
